# EUROPEAN PATENT APPLICATION

(11) **EP 4 386 645 A1**
(43) Date of publication of application: **19.06.2024**
(21) Application number: 21959378.7
(22) Date of filing: 30.09.2021
(51) Int. Cl.: G06Q 20/30, G06Q 20/08, G06Q 30/06

(54) **SETTLEMENT SYSTEM AND SETTLEMENT METHOD**

(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP)
(74) Representative: D Young & Co LLP
(86) International application number: PCT/JP2021/036125
(87) International publication number: WO 2023/053338

(57) **Abstract**

Provided is a settlement technique using a robot. A settlement system 100 is a settlement system that performs settlement of a commodity using a robot 20 which is not fixed, and a computer 10 which is communicable with the robot. The robot includes: a camera; a receiving unit configured to receive a purchase request for a commodity from the computer; and an accepting unit configured to accept an input of purchase-related information which indicates a purchase content of the commodity in accordance with the purchase request. The computer includes: a display unit configured to display an image captured by the camera, and the purchase related information; and a settlement unit configured to start the settlement of the commodity based on the purchase-related information, in a case where a consent to a purchase content of the commodity is obtained.

## Description

### Technical Field

The present invention relates to a settlement system and a settlement method.

### Background Art

In recent years, teleconference systems using the Internet are widely used, where a robot (e.g. telepresence robot), which a user at a remote location can not only talk with face to face but also can control the orientation and position of a camera thereof, is used.

For example, the following Patent Document 1 discloses a mobile body with a camera (telepresence robot) that provides a captured image to a remote operator.

### Citation List

### Patent Document

Patent Document 1: Patent Publication JP-A No. 2019-062308

### Summary

As an example of utilizing a robot, a method for a robot attending a conference in a head office located in a remote area, a method for a robot inspecting a factory, and the like, have been proposed, but use of a robot is still limited. For example, if a robot is installed in a commercial facility, such as a store in not an urban area, a user could purchase a commodity and a service at the store without directly visiting the store, but a method to implement such use of a robot has not yet been proposed.

With the foregoing in view, it is an object of the present invention to provide a settlement technique utilizing a robot.

A settlement system according to an aspect of the present disclosure is a settlement system that performs settlement of a commodity using a robot which is not fixed, and a computer which is communicable with the robot. The robot includes: a camera; a receiving unit configured to receive a purchase request for a commodity; and an accepting unit configured to accept an input of purchase-related information which indicates a purchase content of the commodity in accordance with the purchase request. The computer includes: a display unit configured to display an image captured by the camera and the purchase-related information; and a settlement unit configured to start settlement of the commodity based on the purchase-related information, in a case where a consent to a purchase content of the commodity is obtained.

### Advantageous Effects of Invention

According to the present invention, a settlement technique utilizing a robot can be provided.

### Brief Description of Drawings

Fig. 1 is a diagram depicting a network configuration of a settlement system according to the present embodiment.
Fig. 2 is an image diagram for describing an overview of the settlement system.
Fig. 3 is a block diagram depicting a functional configuration of a computer.
Fig. 4 is a block diagram depicting a functional configuration of a robot.
Fig. 5 is a diagram depicting a physical configuration of the computer.
Fig. 6 is a diagram depicting a physical configuration of the robot.
Fig. 7 is a sequence diagram depicting a settlement flow of a commodity.
Fig. 8 is an image diagram for describing conversation between a user and a person-in-charge.
Fig. 9 is a diagram exemplifying a purchase presentation screen of a commodity.
Fig. 10 is a sequence diagram depicting a settlement flow of a commodity according to a modification.
Fig. 11 is a diagram exemplifying a purchase presentation screen of a commodity according to the modification.

### Description of Embodiments

Embodiments of the present invention will be described with reference to the accompanying drawings. In each drawing, same or similar composing element is denoted with a same reference sign.

### A. Present embodiment

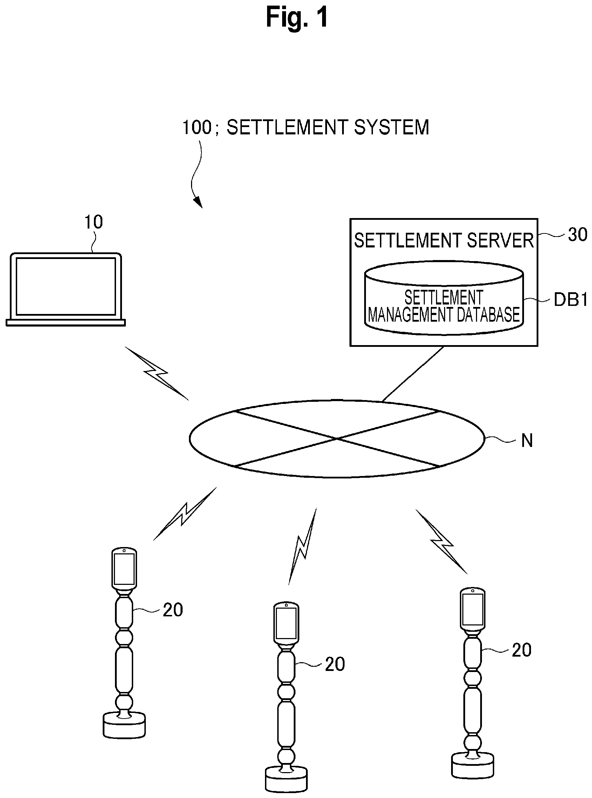

Fig. 1 is a diagram depicting a network configuration of a settlement system 100 according to the present embodiment. The settlement system 100 includes a plurality of robots 20 which are not fixed, a computer 10 which can operate each robot 20, and a settlement server 30. Each robot 20, the computer 10 and the settlement server 30 are inter-communicable via a network N. In Fig. 1, three robots 20 and one computer 10 are illustrated as an example, but a number of robots 20 and a number of computers 10 are arbitrary.

One or a plurality of portions of a network N may be a cable network or a wireless network. The network N is not especially limited, but may be, for example, such a near field communication as an Ad Hoc network, an intranet, an extra net, a virtual private network (VPN), a local area network (LAN), a wireless LAN (WLAN), a wide area network (WAN), a wireless WAN (WWAN), a metropolitan area network (MAN), a part of Internet, a part of a public switched telephone network PSTN), a portable telephone network, integrated service digital networks (ISDNs), wireless LANs, a long term evolution (LTE), a code division multiple access (CDMA), and Bluetooth^{®}, or a satellite communication, or a combination of at least 2 of the above communications.

### <Overview of settlement system 100>

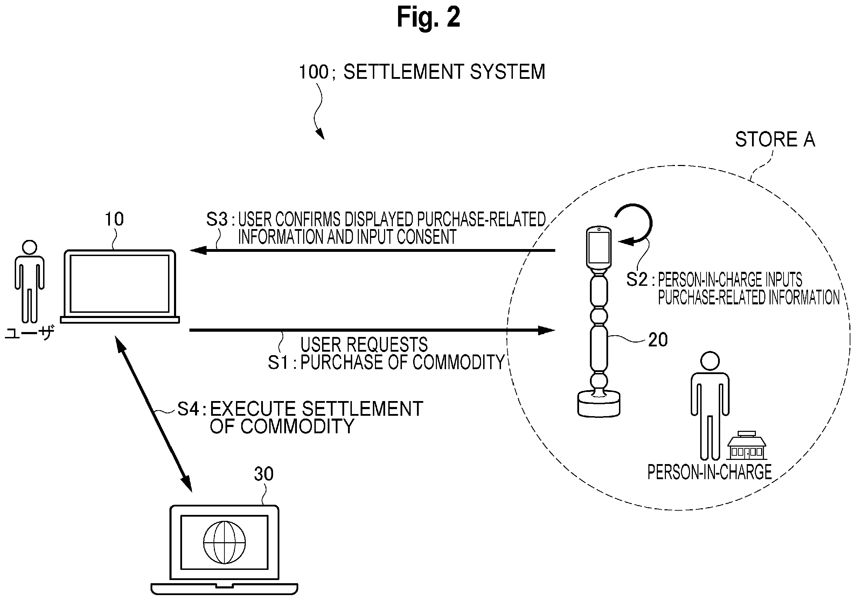

Fig. 2 is an image diagram for describing an overview of the settlement system 100. Each robot 20 is disposed in a commercial facility in a local area, such as a store, a shopping mall, and convenience store. By operating the computer 10, the user can remotely access the robot 20 disposed in a desired commercial facility ("store A" in the following), and remotely visit the store A. The user looks around inside the store A by appropriately operating the robot 20 of the store A using the computer 10. When a desired commodity is found, the user sends a purchase request for this commodity to a person-in-charge in the store A (step S1). In this description, a "commodity" includes all the targets of a commercial transaction, that is, not only mass producible tangible movables which are distributable and substitutable, but also services.

When the purchase request is received, the person-in-charge inputs the information required for the user to purchase this commodity via the robot 20 (step S2). Here the "information required for the user to purchase the commodity" refers to information indicating the purchase contents, such as the purchase price of the commodity, the purchase commodity name, the purchase quantity, and the like (hereafter called "purchase-related information"). The purchase-related information is sent from the robot 20 to the computer 10 of the user. The user confirms the purchase-related information displayed on the computer 10, and inputs their consent (step S3). When this input is performed, the computer 10 performs settlement of this commodity collaboratively with the settlement server 30 (step S4).

According to the settlement system 100 of the present embodiment, the user can purchase a desired commodity found in a store by operating the robot 20, without directly visiting the store. Now configurations of the computer 10, the robot 20 and the settlement server 30 will be described.

### <Functional configuration>

### (Computer 10)

The computer 10 is an information processing device to operate the robot 20, and to input information required for user authentication when the robot 20 is used. The computer 10 is, for example, a general or dedicated information processing device, such as a smartphone, a table terminal, a PDA, a personal computer, and a wearable terminal.

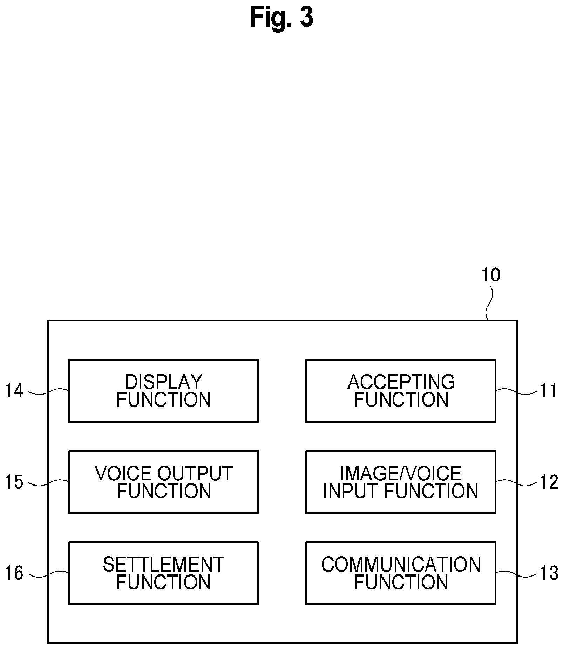

Fig. 3 is a block diagram depicting a functional configuration of the computer 10.

The computer 10 includes: an accepting function 11, an image/voice input function 12, a communication function 13, a display function 14, a voice output function 15, and a settlement function 16.

The accepting function 11 accepts input of various commands, including operation of the robot 20. The image/voice input function 12 inputs images and voices acquired by a camera and the microphone of the computer 10. The images and voices inputted to the computer 10, are, for example, facial images and voices of the user.

The communication function 13 performs transmission/reception of various data with the robot 20, the settlement server 30 or the like. Specifically, the communication function 13 receives images and voices acquired by a camera and a microphone of the robot 20, and purchase-related information (e.g. purchase price of a commodity, purchase commodity name, purchase quantity), and sends images and voices acquired by a camera and a microphone of the computer 10 to the robot 20. The communication function 13 also sends the purchase-related information and the like to the settlement server 30.

The display function 14 displays images captured by the cameras of the computer 10 and the robot 20, the purchase-related information and the like. The voice output function 15 outputs the voices and the like acquired by the microphone of the computer 10 and the robot 20. The settlement function 16 performs settlement of the commodity collaboratively with the settlement server 30 in a case where the user inputted their consent to the purchase of the commodity.

### (Robot 20)

The robot 20 is a robot that is not fixed, and one or a plurality of robots are disposed in each of the various commercial facilities mentioned above. Here "the robot 20 is not fixed" includes a case where the robot 20 is a mobile type which has a moving portion (e.g. wheels), and a case where the robot 20 is a wearable type which a person can wear and which has a driving portion (e.g. manipulator). In the present embodiment, [the robot 20] is assumed to be a mobile type robot. The mobile type robot is disclosed for example, in Patent Document 1. The moving portion of the mobile type robot includes: a moving portion that runs using one wheel, two wheels or multiple wheels; a moving portion that runs using a caterpillar; a moving portion that runs on rails; a moving portion that moves by jumping, a moving portion that walks on two legs, four legs or many legs; a moving portion that navigates on or in water by screws; and a moving portion that flies using a propellers or the like. The wearable type robot is disclosed, for example, MHD Yamen Saraiji, Tomoya Sasaki, Reo Matsumura, Kouta Minamizawa and Masahiko Inami : "Fusion: full body surrogacy for collaborative communication," Proceeding SIGGRAPH '18 ACM SIGGRAPH 2018 Emerging Technologies Article No. 7. Further, the robot 20 includes a case of a vehicle or a heavy machine that travels automatically or semiautomatically, or a case of a drone or an airplane. The robot 20 includes a robot having a camera which can move on a rail. Furthermore, the robot 20 may be an avatar robot.

The robot 20 operates based on the instructions from the computer 10 which succeeded in user authentication. The user authentication here may be performed by a known method, and the information for the user authentication may have been registered in advance.

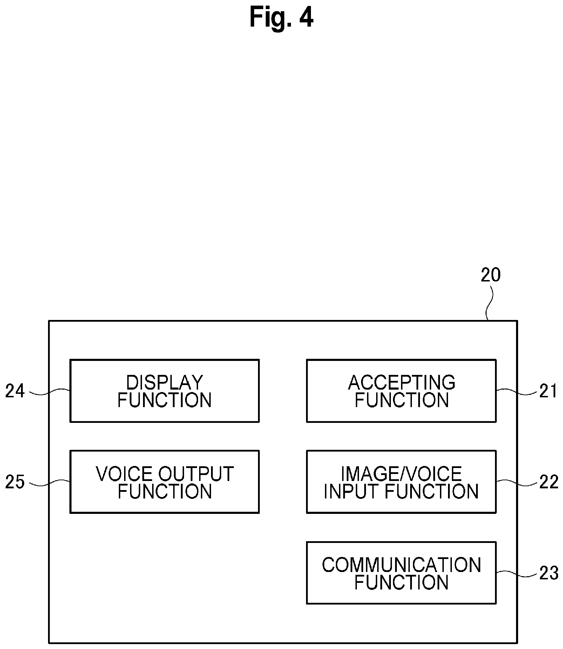

Fig. 4 is a block diagram depicting a functional configuration of the robot 20.

The robot 20 is constituted of an accepting function 21, an image/voice input function 22, a communication function 23, a display function 24, and a voice output function 25.

The accepting function 21 accepts purchase-related information or the like, which a person-in-charge of a store A inputs by operating a touch panel or the like of the robot 20, for example.

The image/voice input function 22 inputs images and voices acquired by the camera and the microphone of the robot 20. The images and the voices inputted to the robot 20 are, for example, a commodity image of the store A where the robot 20 is disposed, and a facial image and voice of the person-in-charge of providing the commodity.

The communication function 23 performs transmission/reception of various data with the computer 10 or the like. Specifically, the communication function 23 receives images and voices acquired by the camera and the microphone of the computer 10, and also sends images and voices acquired by the camera and the microphone to the robot 20, and purchase-related information to the computer 10.

The display function 24 displays images captured by the cameras of the robot 20 and the computer 10, the purchase-related information, and the like. The voice output function 25 outputs the voices acquired by the microphone of the robot 20 and the computer 10, and the like.

### (Settlement server 30)

The settlement server 30 performs electronic settlement of a commodity purchased by the user. The settlement server 30 is constituted of an information processing device, such as a server computer. The settlement server 30 may be constituted of one information processing device, or may be constituted of a plurality of information processing devices via cloud computing or edge computing, for example. The settlement server 30 includes a settlement management database DB1 (see Fig. 1). In the settlement management database DB1, basic information (e.g. user ID, password, name, age, address, contact information), settlement type information (e.g. bank account number, credit card number), settlement history information that indicates the previous settlement history, and the like, are registered in an associated state.

When the purchase-related information on a user is received from the computer 10 or the like, the settlement server 30 performs settlement based on the purchase-related information, such as withdrawing the purchase price of the commodity from the bank account of the user, for example. When settlement is completed normally, the settlement server 30 registers information indicating the settlement contents of this commodity (e.g. commodity name, purchase price, purchase data and time, purchase location) in the settlement management database DB1 as the settlement history information.

### <Physical configuration>

### (Computer 10)

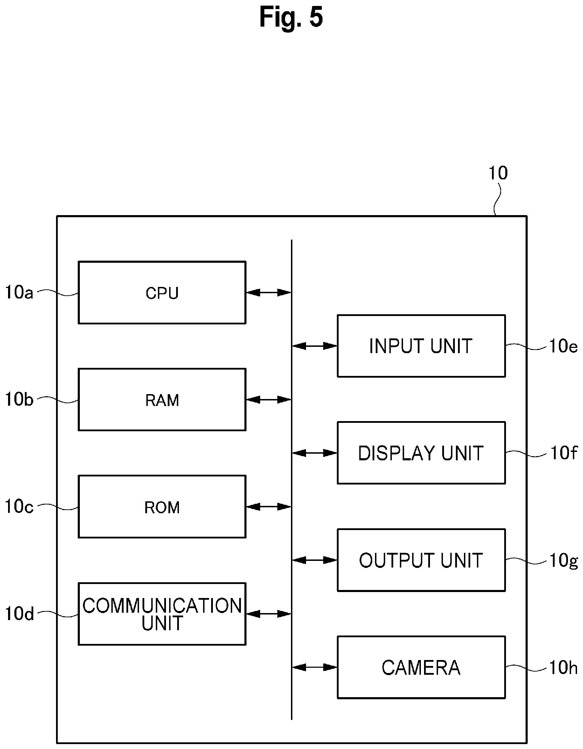

Fig. 5 is a diagram depicting a physical configuration of the computer 10 according to the present embodiment. The computer 10 includes: a central processing unit (CPU) 10a which corresponds to an arithmetic unit; a random access memory (RAM) 10b which corresponds to a storage unit; a read only memory (ROM) 10c which corresponds to a storage unit; a communication unit 10d; an input unit 10e; a display unit 10f; an output unit 10g; and a camera 10h. Each composing element is interconnected via a bus, so that data can be transmitted to or received from each other. The example described here is a case where the computer 10 is constituted of one computer, but the computer 10 may be implemented by a combination of a plurality of computers. The configuration depicted in Fig. 5 is an example, and the computer 10 may include composing elements other than this configuration, or may not include a part of this configuration.

The CPU 10a is a control unit that controls the execution of programs stored in the RAM 10b or ROM 10c, and performs arithmetic operation and processing of data. The CPU 10a is an arithmetic unit that executes a program for settlement of a commodity (hereafter "settlement program") using the robot 20. The CPU 10a CPU 10a receives various data from the input unit 10e, the communication unit 10d, and the camera 10h, so as to display the arithmetic operation result of the data on the display unit 10f, output the voices from the output unit 10g, or store the data in the RAM 10b.

The RAM 10b is a storage unit of which data is rewritable, and may be constituted of a semiconductor storage element, for example. The RAM 10b may store various programs to be executed by the CPU 10a, and such data as user information. This description, however, is an example, and the RAM 10b may store other data, or may not store a part of the above mentioned data.

The ROM 10c is a storage unit from which data can be read, and may be constituted of a semiconductor storage element, for example. The ROM 10c may store a settlement program and unrewritable data, for example.

The communication unit 10d is an interface to connect the computer 10 to another device via the network N.

The input unit 10e is for accepting input of data from the user, and may include a keyboard and a touch panel, for example. The input unit 10e may also include a microphone to input voices.

The display unit 10f is for visually displaying the arithmetic operation result acquired by the CPU 10a, and may be constituted of a liquid crystal display (LCD), for example. The display unit 10f may display an image captured by a camera 20h of the robot 20, an image captured by the camera 10h included in the computer 10, a screen for commodity settlement, and the like.

The output unit 10g is for outputted voices, and may include a voice decoder, a speaker, and the like.

The camera 10h includes an image pickup element for capturing a still image or a moving image, and sends the captured still image or moving image to the display unit 10f and the robot 20 via the communication unit 10d.

The settlement program may be stored in a computer-readable storage medium, such as the RAM 10b and the ROM 10c, and provided in this state, or may be provided from the network N connected via the communication unit 10d. In the computer 10, the functions required for settlement of the commodity using the robot 20 are implemented by the CPU 10a executing the settlement program (see Fig. 3). These physical composing elements are examples, and may not always be independent composing elements. For example, the computer 10 may include a large scale integration (LSI) integrating the CPU 10a, the RAM 10b and the ROM 10c.

### (Robot 20)

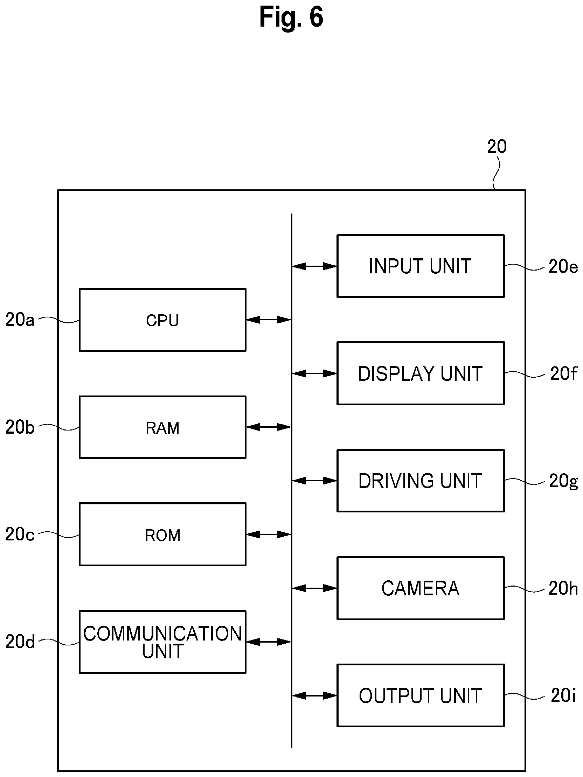

Fig. 6 is a diagram depicting a physical configuration of the robot 20 according to the present embodiment. The robot 20 includes: a CPU 20a which corresponds to an arithmetic unit; a RAM 20b which corresponds to a storage unit; a ROM 20c which corresponds to a storage unit; a communication unit 20d; an input unit 20e; a display unit 20f; a driving unit 20g; the camera 20h; and an output unit 20i. Each composing element is interconnected via a bus, so that data can be transmitted to or received from each other. The configuration depicted in Fig. 6 is an example, and the robot 20 may include composing elements other than this configuration, or may not include a part of this configuration.

The CPU 20a is a control unit that controls execution of programs stored in the RAM 20b or ROM 20c, and performs arithmetic operation and processing of data. The CPU 20a is an arithmetic unit that executes a program for settlement of a commodity (hereafter "settlement program") using the robot 20. The CPU 20a receives various data from the input unit 20e and the communication unit 20d, so as to display the arithmetic operation result of the data on the display unit 20f or store the data in the RAM 20b. The CPU 20a also controls the driving unit 20g and controls the operation of the robot 20.

The RAM 20b is a storage unit of which data is rewritable, and may be constituted of a semiconductor storage element, for example. The RAM 20b may store various programs to be executed by the CPU 20a. This description, however, is an example, and the RAM 20b may store other data or may not store part of the above mentioned data.

The ROM 20c is a storage unit from which data can be read, and may be constituted of a semiconductor storage element, for example. The ROM 20c may store a settlement program and unrewritable data, for example.

The communication unit 20d is an interface to connect the robot 20 to another device via the network N.

The input unit 20e is for accepting input of data from the user, and may include a touch panel. The input unit 20e may also include a microphone to input sounds.

The display unit 20f is for visually displaying the arithmetic operation result acquired by the CPU 20a, and may be constituted of an LCD, for example. The display unit 20f may display an image captured by the camera 10h of the computer 10, an image captured by the camera 20h of the robot 20, and a screen for commodity settlement, and the like.

The driving unit 20g includes an actuator which can be remotely controlled, and includes a moving portion(e.g. wheels), a manipulator, and the like.

In the case where the robot 20 is a mobile type robot, the driving unit 20g includes at least the moving portion (e.g. wheels), but may also include a manipulator. In the case where the robot 20 is a wearable type, the driving unit 20g includes at least a manipulator.

The camera 20h includes an image pickup element for capturing a still image or a moving image, and sends the captured still image or moving image to the display unit 20f and the computer 10 via the communication unit 20d.

The settlement program may be stored in a computer-readable storage medium, such as the RAM 20b and the ROM 20c, and provided in this state, or may be provided from the network N connected via the communication unit 20d. In the robot 20, the functions required for settlement of the commodity using the robot 20 are implemented by the CPU 20a executing the settlement program (see Fig. 4). These physical. composing elements are examples, and may not always be independent composing elements. For example, the robot 20 may include an LSI integrating the CPU 20a, the RAM 20b and the ROM 20c.

### <Processing flow>

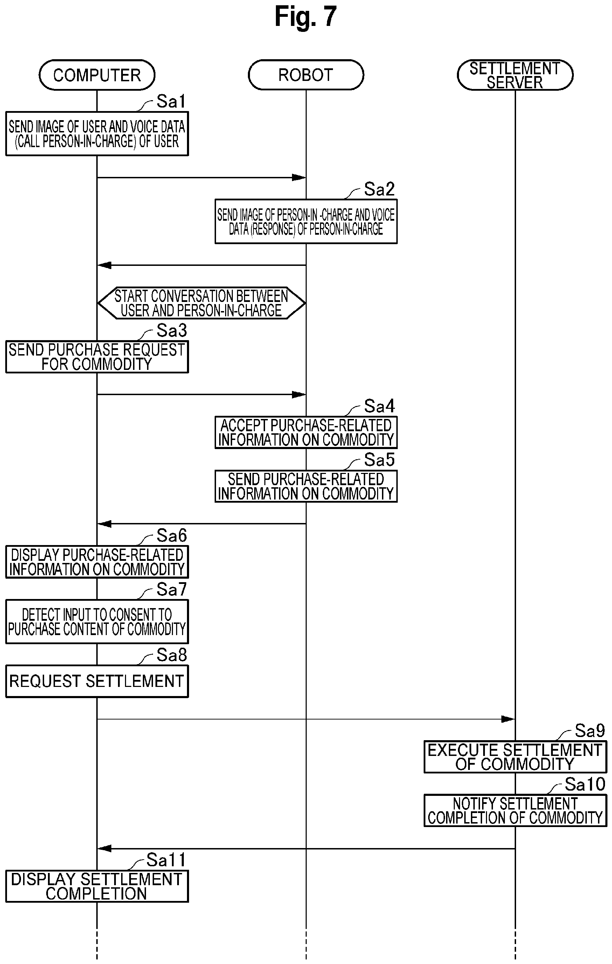

Fig. 7 is a sequence diagram depicting a commodity settlement flow in the settlement system 100 according to the present embodiment. This flow is implemented by each CPU of the computer 10 and the robot 20 executing the settlement program and the like. As a prerequisite, it is assumed that the user has been authorized (that is, user authentication was successful) to operate the robot 20 disposed in the store A using their own computer 10, for example.

The user operates the robot 20 disposed in the store A using the computer 10 to look around the inside of the store A. When an interesting commodity is found, the user calls a person-in-charge of the store A via a microphone while facing the camera of the computer 10, for example, the computer 10 sends an image of the user captured by the camera to the robot 20, and also sends the voice (in this case, call to the person-in-charge) inputted from the microphone to the robot 20 as the voice data (step Sa1).

When the image and the voice data of the user are received from the computer 10, the robot 20 displays the image of the user on the display unit 20f, and outputs the voice of the user from the speaker. When the person-in-charge realizes that the user is calling, the person-in-charge responds to the user's call through the microphone while facing the camera of the robot 20, for example. The robot 20 sends the image of the person-in-charge captured by the camera to the computer 10, and also sends the voice (in this case, the response), inputted via the microphone, to the computer 10 as the voice data (step Sa2). When the response from the person-in-charge via the speaker of the computer 10 is confirmed, the user starts conversion with the person-in-charge.

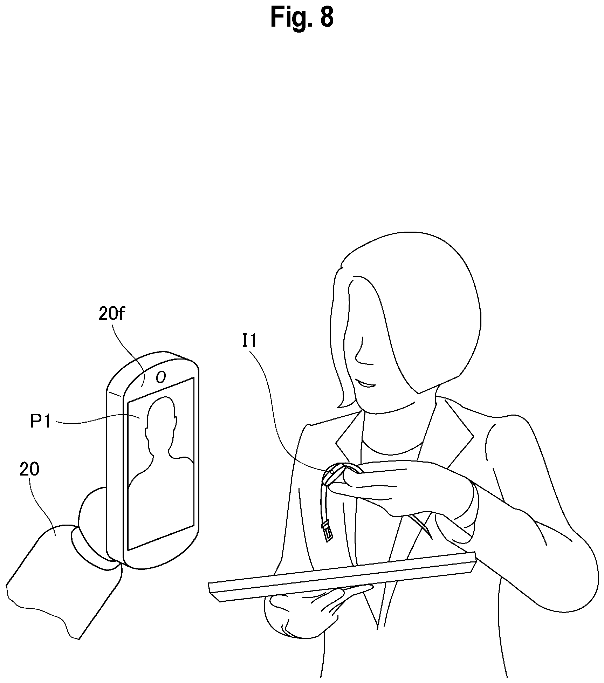

Fig. 8 is an image diagram of the conversation between the user and the person-in-charge.

An image P1 of the user is displayed on the display unit 20f of the robot 20, and a voice of the user is outputted from the speaker of the robot 20. In response to the user' request, the person-in-charge explains about the commodity 11 which the user desires, while positioning the commodity I1 in front of the camera of the robot 20. For example, the person-in-charge explains a brand name, commodity name, price, and the like of the commodity I1. The computer (display unit) 10 displays the image of the commodity I1, and outputs the voice of the person-in-charge explaining about the commodity I1 from the speaker. The user listens to the explanation of the person-in-charge outputted from the speaker, while checking the image of the commodity I1 displayed on the display unit 10f of the computer 10.

Referring back to the description in Fig. 7, the user, who determines to purchase the commodity I1, speaks into the microphone of the computer 10 about the desire to purchase the commodity I1 (purchase request of the commodity 11). The computer 10 sends the purchase request for the commodity I1 received from the user to the robot 20 (step Sa3). When the purchase request for the commodity I1 is received, the robot (receiving unit) 20 outputs this purchase request from the speaker. The person-in-charge, who confirmed that the purchase request for the commodity I1 is received via the robot 20, operates the display unit 20f of the robot 20 by touch operation, for example, and displays a purchase presentation screen of the commodity on the display unit 20f.

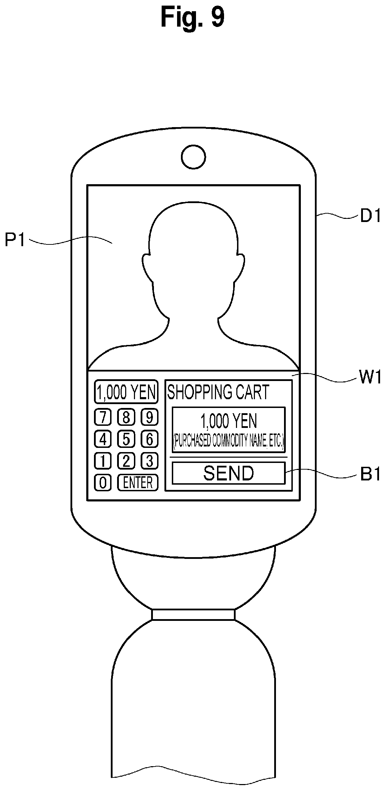

Fig. 9 is a diagram exemplifying the purchase presentation screen D1 of the commodity.

As illustrated in Fig. 9, an image P1 of the user is displayed on the purchase presentation screen D1, and a window W1, for inputting the purchase-related information of the commodity I1, is also displayed.

The person-in-charge inputs the purchase-related information of the commodity I1 which the user is interested in purchasing (e.g. purchase price of commodity I1, the purchase commodity name, purchase quantity) by performing a touch operation on the window W1, then presses a send button B1. In this example, it is assumed that one commodity is purchased, but a plurality of commodities may be purchased. The purchase-related information must include at least the purchase price of the commodity I1, and the other information may be set or changed in accordance with the system design or the like.

Referring again to Fig. 7, the robot (accepting unit) 20 accepts the input of the purchase-related information of the commodity I1 by the person-in-charge (step Sa4). When the pressing of the send button B1 is detected thereafter, the robot 20 sends the inputted purchase-related information of the commodity I1 to the computer 10 (step Sa5).

When the purchase-related information is received from the robot 20, the computer (display unit) 10 displays the purchase-related information on the display unit 10f (step Sa6). The user checks the purchase-related information on the commodity I1, and when the purchase of the commodity I1 is determined, the user inputs their consent to the purchase content of the commodity I1 by touching a consent button (not illustrated) displayed on the display unit 10f, for example.

If the presented purchase price is higher than expected and the user does not consent to the purchase content of the commodity I1, for example, the user may request the person-in-charge to review the purchase-related information (e.g. review the purchase price).

When it is detected that the user inputted their consent to the purchase content of the commodity I1 (step Sa7), the computer (settlement unit) 10 accesses the settlement server 30 to start settlement of the commodity I1. The computer 10 requests settlement by sending the purchase-related information on the commodity I1 purchased by the user, including the user ID and the like, to the settlement server (step Sa8). When the settlement request is received from the computer 10, the settlement server 30 refers to the settlement management database DB1, and performs settlement based on the received purchase related information, by withdrawing the purchase price of the commodity I1 from the bank account of the user, for example (step Sa9). When a successful settlement is confirmed, the settlement server 30 sends the settlement completion notification to the computer 10 (step Sa10). When the settlement completion notification is received from the settlement server 30, the computer 10 displays that the settlement completed successfully on the display unit 10f (step Sa11).

As described above, according to the settlement system 100 of the present embodiment, the user can purchase the commodity that they like, found in a store, by operating the robot 20, without directly visiting the store. On the other hand, the store where the robot 20 is disposed can perform commercial transactions online without complicated procedures (e.g. listing details of the commodities dealt with and registering the list in a database) and significant installation costs.

### B. Modification

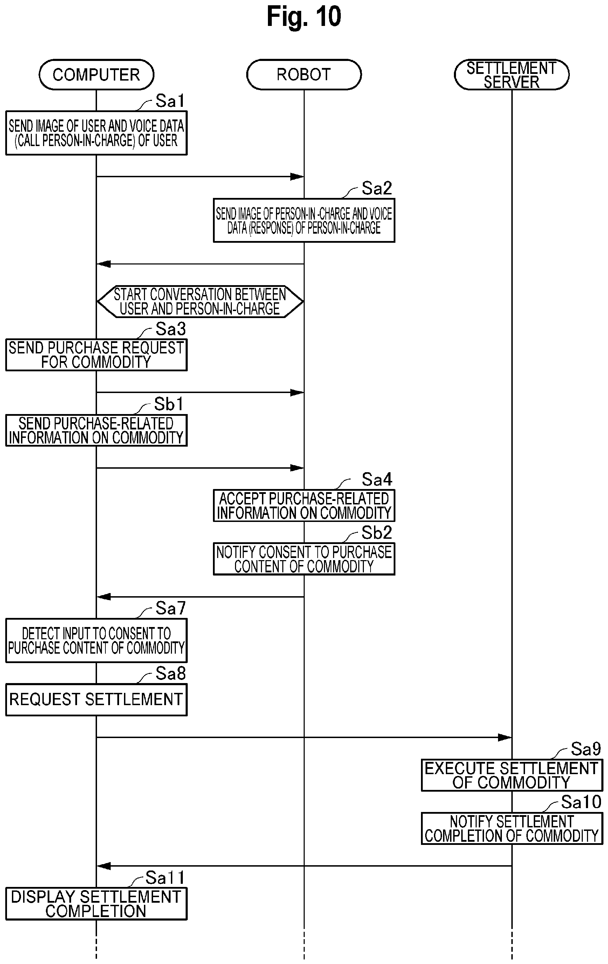

Fig. 10 is a sequence diagram depicting a settlement flow of a commodity in the settlement system 100 according to a modification. In the above mentioned embodiment, the person-in-charge inputs the purchase-related information on the commodity I1, and the user inputs their consent to the purchase content of the commodity I1. With this modification, on the other hand, the user inputs the purchase-related information on the commodity I1, and the person-in-charge inputs their consent to the purchase content of the commodity I1. Other processing is the same as the above mentioned embodiment, hence a corresponding step is denoted with a same reference sign, and detailed description thereof will be omitted.

When the user determines purchase of the commodity I1, the computer 10 sends the purchase request of the commodity I1 by the user to the robot 20 (step Sa3). Then the user acquires the purchase-related information, including the purchase prices of the commodity I1, by having a conversation with the person-in-charge. When the purchase-related information on the commodity I1 is received from the person-in-charge, the user operates the display 10f of the computer 10 by touch operation, for example, and displays the purchase presentation screen of the commodity on the display unit 10f.

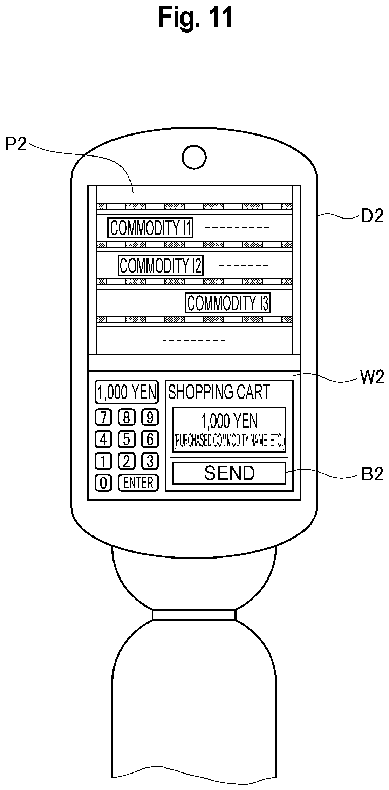

Fig. 11 is a diagram exemplifying a purchase presentation screen D2 of the commodity.

As illustrated in Fig. 11, an image P2 (e.g. image of a commodity) in the store A is displayed on the purchase presentation screen D2, and a window W2, for inputting the purchase-related information on the commodity I1, is also displayed. The user inputs the purchase-related information of the commodity I1, which the user desires to purchase, by performing touch operation on the window W2.

Referring again to Fig. 10, the computer 10 sends the purchase-related information on the commodity I1, which was inputted by the user, to the robot 20 (Step Sb1). When the input of the purchase-related information on the commodity I1, which the user desires to purchase, is accepted via the computer 10 (step Sa4), the robot (accepting unit) 20 displays this information on the display unit 20f. When the purchase-related information on the commodity I1 displayed on the display unit 20f is confirmed, the person-in-charge inputs their consent to the purchase content of the commodity I1 by touching a consent button (not illustrated) displayed on the display unit 20f, for example. The robot 20 notifies the computer 10 that the consent is inputted (step Sb2).

When it is detected that the person-in-charge inputted their consent to the purchase content of the commodity I1 via the robot 20 (step Sa7), the computer (settlement unit) 10 accesses the settlement server 30 to start settlement of the commodity I1. The subsequent operation is the same as the above mentioned embodiment, hence description thereof will be omitted.

As described above, the user may input the purchase-related information on the commodity 11, instead of the person-in-charge of the store A inputting the purchase-related information on the commodity I1. In the description on the embodiment and the modification, the purchase-related information on the commodity I1 is inputted by the touch operation, but [the present invention] is not limited thereto. For example, the purchase-related information on the commodity I1 may be inputted by voice or the like.

The embodiment and the modification described above are to assist in understanding of the present invention, and are not intended to limit interpretation of the present invention. Each element and disposition, material, condition, shape, size and the like thereof are not limited to the example described hereto, but may be changed when necessary. Each element may be partially replaced with each other or combined with each other.

In the embodiment and the modification, "unit" not only refers to a physical unit, but also includes a case of the function of the "unit" that is implemented by software. Further, the functions of one "unit" or the device may be implemented by two or more physical units or devices, and the functions of two or more "units" or devices may be implemented by one physical unit or device.

### Reference Signs List

- 10: Computer
- 10a: CPU
- 10b: RAM
- 10c: ROM
- 10d: Communication unit
- 10e: Input unit
- 10f: Display unit
- 10g: Output unit
- 10h: Camera
- 20: Robot
- 20a: CPU
- 20b: RAM
- 20c: ROM
- 20d: Communication unit
- 20e: Input unit
- 20f: Display unit
- 20g: Driving unit
- 20h: Camera
- 20i: Output unit
- 100: Settlement system

## Claims

1. A settlement system performing settlement of a commodity using a robot which is not fixed, and a computer, which is communicable with the robot, wherein
the robot includes:
a camera;
a receiving unit configured to receive from the computer a purchase request for a commodity; and
an accepting unit configured to accept an input of purchase-related information which indicates a purchase content of the commodity in accordance with the purchase request, and
the computer includes:
a display unit configured to display an image captured by the camera and the purchase-related information; and
a settlement unit configured to start the settlement of the commodity, based on the purchase-related information, in a case where a consent to a purchase content of the commodity is obtained.

2. The settlement system according to claim 1, wherein
the accepting unit accepts the input of the purchase-related information performed by a person-in-charge of the commodity, and
the settlement unit starts settlement of the commodity in a case where a user, who desires to purchase the commodity, inputs a consent to the purchase content of the commodity.

3. The settlement system according to claim 1, wherein
the accepting unit accepts via the computer the input of the purchase-related information performed by the user who desires to purchase of the commodity, and
the settlement unit starts settlement of the commodity via the robot, in a case where the person-in-charge of the commodity inputs a consent to the purchase content of the commodity.

4. The settlement system according to any one of claims 1 to 3, wherein
there are a plurality of computers which are communicable with the robot, and
the receiving unit receives a purchase request for the commodity from the computer succeeded in user authentication, out of the plurality of computers.

5. The settlement system according to any one of claims 1 to 4, wherein
the purchase-related information includes at least a purchase price.

6. A settlement method for performing settlement of a commodity by using a robot, which includes a camera and is not fixed, and a computer, which is communicable with the robot, the method comprising:
a receiving step of, by the robot, receiving from the computer a purchase request for a commodity;
an accepting step of, by the robot, accepting an input of purchase-related information which indicates a purchase content of the commodity in accordance with the purchase request;
a display step of, by the computer, displaying an image captured by the camera of the robot and the purchase-related information; and
a settlement step of, by the computer, starting settlement of the commodity, based on the purchase-related information, in a case where a consent to a purchase content of the commodity is obtained.
